# EUROPEAN PATENT APPLICATION

(11) **EP 1 702 682 A1**
(43) Date of publication of application: **20.09.2006**
(21) Application number: 05703674.1
(22) Date of filing: 07.01.2005
(51) Int. Cl.: B01J 27/19, C10G 45/08

(54) **HYDROGENATION DESULFURIZATION CATALYST FOR PETROLEUM HYDROCARBON AND METHOD OF HYDROGENATION DESULFURIZATION USING THE SAME**

(30) Priority: 09.01.2004 JP 2004004768; 23.07.2004 JP 2004216337
(71) Applicant: Nippon Oil Corporation, Tokyo 105-8412 (JP)
(72) Inventor: Iki, Hideshi, Yokohama-shi, Kanagawa 2310815 (JP); Hayasaka, Kazuaki, Yokohama-shi, Kanagawa 2310815 (JP); Takahashi, Shinya, Yokohama-shi, Kanagawa 2310815 (JP); Fukazawa, Kazuo, Yokohama-shi, Kanagawa 2310815 (JP)
(74) Representative: Grünecker, Kinkeldey, Stockmair & Schwanhäusser Anwaltssozietät
(86) International application number: PCT/JP2005/000435
(87) International publication number: WO 2005/065823

(57) **Abstract**

The present invention provides a hydrodesulfurization that can attain an extremely high depth of desulfurization to a sulfur content of 10 ppm by mass, exert high denitrogenation activity, and has high nitrogen resisting properties to nitrogen compounds which are substances inhibiting desulfurization reaction. The catalyst is suitable for hydrodesulfurizing petroleum hydrocarbons and **characterized in that** an inorganic porous support composed of mainly alumina contains, as active metals, at least one metal selected from the metals of Group 8 of the periodic table and at least one metal selected from the metals of Group 6A of the periodic table in a molar ratio defined by [oxide of the Group 8 metal] / [oxide of the Group 6A metal] ranging from 0.105 to 0.265 and the content of the Group 6A metal in terms of oxide is in the range of 20 to 30 percent by mass based on the mass of the catalyst.

## Description

### [Field of the Invention]

The present invention relates to a hydrodesulfurization catalyst for petroleum hydrocarbons and a process for hydrodesulfurization. More specifically, the present invention relates to a process for hydrodesulfurizing petroleum hydrocarbons containing sulfurs under the specific conditions using a specific catalyst.

### [Background of the Invention]

In recent years, awareness of the environmental issue and air pollution has been raised, and particularly, has been directed to the sulfur components contained in fuels used for transportation applications. For example, gasoline engines have been strongly demanded to be improved in fuel efficiency not only in the sense of resource conservation or economical factors but also in the sense of reduction of carbon dioxide emissions. Therefore, the development and promotion of new combustion systems such as lean burn engines and direct gasoline-injection engines have been advanced under these situations. However, the components constituting the exhaust gas from these engines are not always the same as those to be treated with the conventional ternary exhaust gas treating catalysts, on which further improvement has been required. It has been indicated that the sulfur components contained in gasoline adversely affect such newly developed exhaust gas treatment systems or catalysts.

On the other hand, in addition to chemical substances such as SOx and NOx, fine particles so-called "particulates" are contained in the exhaust gas from a diesel engines using gas oil and are in danger of harming the human health. It has been proposed that a particulate trap filter such as DPF or a system capable of burning particulates is mounted downstream of an engine in order to remove particulates. The use of such devices in diesel powered automobiles have been studied. Furthermore, a reduction catalyst for removing NOx has been developed. However, these devises and catalysts are likely to be poisoned or deteriorated with SOx produced due to the combustion of sulfur components in fuel. Such deterioration of the exhaust gas purification system or catalyst is a serious problem for diesel powered automobiles such as trucks that run longer distance than gasoline-fueled automobiles. In order to solve this problem, it is strongly demanded to decrease the sulfur content in gas oil as much as possible. Gas oil used as a diesel fuel contains a fraction classified as a kerosene fraction by its boiling range in such a certain percentage that the product properties are optimally maintained. Therefore, it is necessary to decrease the sulfur contents both in the kerosene fraction and gas oil fraction so as to decrease the total sulfur content in gas oil used as fuel. Such gas oil with low sulfur content can decrease the amount of sulfur oxide or the like which is harmful to the human health when it is used as fuel for various heating devices such as stoves.

Furthermore, it has been required to decrease the amount of the aromatic compounds in fuel oil, regarded as substances responsible for causing the generation of particulates.

The petroleum hydrocarbon fractions excluding the residue obtained by distilling crude oil or cracking fuel oil contain 0.1 to 3 percent by mass of sulfur components and thus are usually used as a base fuel after being hydrodesulfurized. The main sulfur compounds contained in the petroleum hydrocarbon fractions are thiophene, benzothiophene, dibenzothiophene, and derivatives thereof. When the petroleum hydrocarbons are deeply desulfurized to a low sulfur level such as a kerosene fraction level or a gas oil fraction level, these compounds are likely to be poorer in reactivity as the desulfurization proceeds. That is, the hydrodesulfurization of the petroleum hydrocarbons is unlikely to proceed but if under more severe conditions because the sulfur compounds remaining as the hydrodesulfurization proceeds to each fraction are poorer in reactivity. For example, particularly benzothiophenes contained in the kerosene fraction and alkyl-substituted dibenzothiophenes having a plurality of alkyl groups as substituents contained in the gas oil fraction, such as 4,6-dimethylbenzothiophene are poor in reactivity and inhibit the desulfurization of the fractions from proceeding to a low sulfur level of 10 ppm by mass.

Hydrodesulfurization of petroleum hydrocarbons is known to include a reaction system wherein sulfur atoms are drawn directly from sulfur compounds and a reaction system wherein it progresses through a reaction where aromatic rings next to sulfur atoms are hydrogenated. It is assumed that particularly, desulfurization of compounds which are poor in desulfurization reactivity requires the latter reaction system wherein aromatic rings are hydrogenated. Furthermore, in addition to the hydrogenation reaction, the hydrodesulfurization is also strongly required to involve a cracking reaction enabling the cleavage of sulfur-carbon bonds.

So far, the type, quantity, and percentage of active metals have been optimized within the conventionally conceivable extent to produce a hydrodesulfurization catalyst for refining petroleum. Under these circumstances, catalysts containing active metals such as cobalt-molybdenum or nickel-molybdenum have been vigorously optimized in these regards, and it is found that for hydrodesulfurization catalysts containing such active metals, the optimum point where the desulfurization activity is highest is in the cobalt-molybdenum or nickel-molybdenum molar ratio range of 0.3 to 1 (see, for example, non-patent documents 1 and 2 below). However, as a result of various studies conducted by the inventors of this invention, it was found that the hydrodesulfurization catalysts containing active metals in the foregoing range were not able to exhibit desulfurization activity enough to achieve an extremely high depth of desulfurization at which the sulfur components are reduced to 10 ppm by mass. This strongly suggests that a catalyst activation mechanism different from that expected to achieve the foregoing conventional desulfurization level is now required.

Although a method wherein the number of active site is increased by increasing the level of active metals to be supported may be used in order to achieve a higher desulfurization activity, there is a limit to increase the level of active metals even though using a porous support containing alumina as the main component, with a higher surface area. If active metals are excessively supported on a support, they will condense and be adversely decreased in activity. Furthermore, if active metals are excessively supported on a support, the pores of the resulting catalyst will be clogged, leading to some technical limitations that the catalyst fails to exert activity sufficiently or is extremely decreased in activity.

In addition to the sulfur components, nitrogen components are contained in the petroleum hydrocarbon fractions excluding the residue obtained by distilling crude oil or cracking fuel oil. Such nitrogen components exist in the form of organic nitrogen compounds such as amine, pyridine, pyrrole, indole, quinoline, carbazol, and derivatives thereof. It is known that such nitrogen compounds adsorb to a catalyst and reduce the activity thereof (see, for example, non-patent document 3 below). Hydrocarbons containing a large amount of the nitrogen compounds may be treated depending on the type of crude oil or type of refining process, and the presence of the nitrogen compounds is regarded as one of the serious problems as long as the conventional techniques are used.
(1) Non-Patent Document 1
   Industrial & Engineering Chemistry Fundamentals, American Chemistry Society, Vol. 25, pages 25 to 36, 1986 (U.S.A.), by Henrik Topsoe et al.
(2) Non-Patent Document 2
   Catalysis Today, Elsevier, Vol. 39, pages 13 to 20, 1997 (Holland), by Emmanuel Lecrenay, Kinya Sakanishi, and Isao Mochida
(3) Non-Patent Document 3
   Catalysis Today, Elsevier, Vol. 52, pages 381 to 495, 1999 (Holland), by Edward Furimsky and Franklin E. Massoth

### [Disclosure of the Invention]

It is an object of the present invention to provide a catalyst with an extremely high desulfurization activity, which is capable of attaining an extremely high depth of desulfurization that is a sulfur content of 10 ppm by mass or less. It is also an object of the present invention to provide a catalyst with a high denitrogenation activity to nitrogen compounds inhibiting desulfurization reaction. It is also an object of the present invention to provide a catalyst which is less subject to the inhibition of desulfurization reaction by nitrogen compounds.

The present invention was accomplished as a result of extensive research and study conducted by the inventors to achieve the foregoing objects. That is, according to a first aspect of the present invention, there is provided a hydrodesulfurization catalyst for petroleum hydrocarbons wherein an inorganic porous support composed of mainly alumina contains, as active metals, at least one metal selected from the metals of Group 8 of the periodic table and at least one metal selected from the metals of Group 6A of the periodic table in a molar ratio defined by [oxide of the Group 8 metal]/[oxide of the Group 6A metal] ranging from 0.105 to 0.265 and the content of the Group 6A metal in terms of oxide is in the range of 20 to 30 percent by mass based on the mass of the catalyst.

According to a second aspect of the present invention, there is provided the hydrodesulfurization catalyst for petroleum hydrocarbons according to the first aspect wherein the inorganic porous support further contains phosphorus in an amount of 0.5 to 10 percent by mass in terms of oxide, of the support.

According to a third aspect of the present invention, there is provided a process for hydrodesulfurizing petroleum hydrocarbons using the foregoing hydrodesulfurization catalyst.

The present invention will be described in more detail below.

The catalyst of the present invention contains an inorganic porous substance composed of mainly alumina as a support. Alumina is contained in an amount in terms of oxide of preferably 80 percent by mass or more, more preferably 85 percent by mass or more, and even more preferably 90 percent by mass or more, of the support. Alumina is a porous support providing the catalyst with such a suitable pore volume that hydrocarbon molecules with a boiling point of 240 to 380°C diffuse. Alumina of less than 80 percent by mass would be difficult in forming a support with a sufficient pore volume.

The inorganic porous support preferably contains phosphorus. The inclusion of phosphorus can make the catalyst less subject to inhibition of desulfurization reaction caused by nitrogen compounds. Phosphorus is contained in an amount in terms of oxide of preferably 0.5 to 10 percent by mass, more preferably 1 to 9 percent by mass, and even more preferably 2 to 6 percent by mass, of the support. Phosphorus of less than 0.5 percent by mass in terms of oxide would fail to exert sufficient desulfurization activity and be less effective in improving the nitrogen resistance properties, while phosphorus of more than 10 percent by mass would increase the acidic properties of the support and thus decompose hydrocarbons, possibly leading to reduction in yield and in the activity of the catalyst caused by the formation of coke due to the decomposition.

In addition to alumina and phosphorus, the support preferably contains at least one element selected from Si, Ti, Zr, Mg, Ca, and B in an amount in terms of oxide of 1 to 10 percent by mass of the support. The content of this element is more preferably from 1.2 to 9 percent by mass and even more preferably from 1.5 to 8 percent by mass. The element is preferably Si, Ti, Zr, or B, more preferably Si, Ti, or B, and particularly preferably Si. These elements may be used in combination. The combination is preferably Si-Ti, Si-Zr, Si-B, or Ti-B, more preferably Si-Ti, Si-B, or Ti-B, and even more preferably Si-Ti or Si-B. Although the mechanism exhibiting advantageous effects attained by addition of these elements have not been elucidated, it is assumed that these elements form a complex oxide state together with alumina and thus work synergistically with the effects of the supported active metal thereby facilitating the cleavage of the bonds between the carbon atoms and sulfur or nitrogen atoms of sulfur compounds or nitrogen compounds. The catalyst is improved in desulfurization activity and nitrogen resistance properties by addition of the elements. The element of less than 1 percent by mass in terms of oxide would cause the resulting catalyst to be reduced in desulfurization activity and deteriorated in nitrogen resistance properties while the element of more than 10 percent by mass would increase the acidic properties of the support, possibly resulting in the occurrence of side reactions such as decomposition.

There is no particular restriction on the method of preparing alumina mainly composing the support. For example, alumina may be prepared by neutralizing or hydrolyzing a aluminum salt and aluminate, or prepared through an intermediate obtained by hydrolyzing aluminum amalgam or aluminum alcoholate. Alternatively, commercially available alumina intermediates and boehmite powder may be used.

There is no particular restriction on the method of allowing the support to contain phosphorus. A method is usually employed in which phosphoric acid or an alkali salt thereof is added to alumina upon the preparation thereof. For example, phosphorus may be added in the form of an aluminum oxide gel obtained after it is added to an aluminum aqueous solution, or may be added to an prepared aluminum oxide gel. Alternatively, phosphorus may be added to a mixture of water or an acid aqueous solution and a commercially available alumina intermediate or boehmite powder when the mixture is kneaded. Preferably, the support contains phosphorus during the process of preparing an aluminum oxide gel. Phosphorus is present in the form of an oxide in the support.

There is no particular restriction on the method of allowing the support to contain an element selected from Si, Ti, Zr, Mg, Ca, and B. For example, a method may be employed in which an oxide, hydroxide, nitrate, sulfate or any other salt compound of any of these elements in the form of a solid or a solution is added to alumina at any stage of the preparation thereof. Alternatively, the support may be impregnated with a solution containing any of the elements after it is calcined. Preferably, the element is added at any stage prior to calcination of alumina. The element is present in the form of an oxide in the support.

In the present invention, at least one metal selected from the metals of Group 8 in the periodic table and at least one metal selected from the metals of Group 6A in the periodic table are used as the active metals to be supported on the support. Examples of the Group 8 metal include Co and Ni while examples of the Group 6A metal include Mo and W. The combination of the Group 8 metal and Group 6A metal is preferably Co-Mo, Ni-Mo, Co-W, Ni-W, Co-Ni-Mo, or Co-Ni-W, more preferably Co-Mo or Ni-Mo. The content of the Group 6A metal in terms of oxide is in the range of preferably 20 to 30 percent by mass, more preferably 21 to 26 percent by mass, and even more preferably 22 to 25 percent by mass based on the mass of the catalyst. The Group 6A metal of less than 20 percent by mass would be less in active site and thus fail to exert sufficient desulfurization activity. The Group 6A metal of more than 30 percent by mass would condense and thus be only reduced in desulfurization activity.

The supporting ratio of the Group 8 metal and Group 6A metal is necessarily at a molar ratio defined by [Group 8 metal oxide]/[Group 6A metal oxide] ranging from 0.105 to 0.265, preferably 0.110 to 0.260, more preferably 0.115 to 0.250, and even more preferably 0.120 to 0.220. The molar ratio of less than 0.105 would result in a catalyst which is reduced in desulfurization activity because the Group 8 metal fails to exert its cocatalyst effect sufficiently. The molar ratio of more than 0.265 would result in a catalyst which fails to exert its hydrogenation activity sufficiently and is reduced in desulfurization activity and nitrogen resistance properties because the inhibition of the desulfurization activity caused by nitrogen compounds would be significant.

The total content of the Group 8 metal and Group 6A metal is preferably 22 percent by mass or more, more preferably 23 percent by mass or more, and even more preferably 25 percent by mass or more in terms of oxide based on the mass of the catalyst. The total content of less than 22 percent by mass would cause the catalyst to exert desulfurization activity insufficiently due to the less amount of the active metals.

Preferably, the support contains phosphorus as a active component together with the foregoing active metals. The amount of phosphorus to be supported is in the range of preferably 0.105 to 0.255, more preferably 0.120 to 0.240, and most preferably 0.130 to 0.205 when the amount is defined by a molar ratio of [phosphorus pentoxide] / [the Group 6A metal oxid-e]. Phosphorus contained in the molar ratio of less than 0.105 would fail to exhibit its effect sufficiently while phosphorus contained in the molar ratio of more than 0.255 would increase the acidic properties of the catalyst and thus facilitate decomposition thereof or coke forming reaction.

There is no particular restriction on the method of supporting the Group 8 metal and Group 6A metal, which are the active metal component of the catalyst. Therefore, there may be used any conventional method employed when a hydrodesulfurization catalyst is produced. For example, a method is preferably employed in which a support is impregnated with a solution of salts of the active metals. Alternatively, an equilibrium adsorption method, pore-filling method, or incipient-wetness method is also preferably used. For example, the pore-filling method is a method in which the pore volume of a support is measured in advance, and then the support is impregnated with the same volume of a metal salt solution. There is no particular restriction on the method of impregnating the support with a solution. Therefore, any suitable method may be used depending on the amount of the metals to be supported and physical properties of the support.

There is no particular restriction on the method of supporting phosphorus on the support. Phosphorus may be supported on the support together with a Group 8 metal and a Group 6A metal using a solution in which phosphorus coexists therewith or before or successively after these active metals are supported on the support. Phosphorus may be supported on the support by any of the forgoing methods such as an equilibrium adsorption method.

The hydrodesulfurization catalyst of the present invention has an average pore radius sought by the BET method using nitrogen in the range of preferably 30 to 45 Å, more preferably 32 to 40 Å. An average pore radius of smaller than 30 Å is not preferable because the reaction molecules can not diffuse in the pores, resulting in low activity. An average pore radius of larger than 45 Å is not also preferable because the catalyst will have a smaller surface area and thus fail to exert desulfurization activity sufficiently. The pore volume of the catalyst with a pore radius of smaller than 30 Å is in the range of preferably 13 to 33 percent, more preferably 15 to 30 percent, and even more preferably 25 to 30 percent of the total pore volume. The pores with a pore radius of smaller than 30 Å are poorer in diffusiveness of reaction molecules than those with a pore radius of larger than 30 Å but can not be ignored because they are contributive to desulfurization reaction. The pore volume of less than 13 percent would result in reduction in the effective surface area of the catalyst and thus in the activity thereof. The percentage of greater than 33 percent would only cause reduction in the activity of the catalyst due to the influence of the diffusion of reaction molecules. The pore volume of the catalyst with a pore radius of larger than 45 Å is in the range of preferably 5 to 20 percent, more preferably 8 to 15 percent, and even more preferably 12 to 15 percent. It is assumed that the pores in this range are important because they exert an influence on the extent that reaction molecules reach the reaction sites. Therefore, the pore volume of less than 5 percent would result in reduction in the catalyst activity because reaction molecules fail to diffuse sufficiently. However, the pore volume of more than 20 percent would result in reduction in the surface area of the catalyst and thus in the activation thereof.

In the present invention, hydrodesulfurization of petroleum hydrocarbons is conducted using the above-described catalyst.

The petroleum hydrocarbons to which the catalyst of the present invention is applicable are fractions produced from an atmospheric distillation apparatus for a crude oil containing 80 percent by volume or more of fractions whose boiling point is in the range of 140 to 550°C, those produced from a vacuum distillation apparatus, and those produced through refining processes for producing various petroleum products, such as thermal cracking, catalytic cracking, and hydrogenation. The hydrodesulfurization catalyst of the present invention is suitable for desulfurization from sulfuric components such as thiophenes, benzothiophenes, and dibenzothiophenes and particularly suitable for desulfurization of petroleum hydrocarbons containing 80 percent by volume or more of a fraction whose boiling point is in the range of 240 to 380°C, i.e. , gas oil fraction as well as petroleum hydrocarbons containing 80 percent by volume or more of a fraction whose boiling point is in the range of 140 to 240°C, i.e., kerosene fraction. In addition to fractions obtained by distilling crude oil, the petroleum hydrocarbon may be a gas oil fraction obtained by thermal cracking or catalytic cracking, preferably 50 percent by volume or more, more preferably 70 percent by volume or more of which gas oil fraction is a straight gas oil fraction. Gas oil fractions produced through thermal cracking or catalytic cracking contain more olefin and aromatic components than the straight gas oil. If the percentage of the gas oil fractions increases, they would be reduced in reactivity and the resulting dehydrodesulfurized oil would be deteriorated in color. For the same reasons, the kerosene fraction contains a straight kerosene in an amount of preferably 50 percent by volume or more, more preferably 70 percent by volume or more.

The gas oil fractions described above generally contain 20 to 30 percent by volume of total aromatic components, 0.8 to 2 percent by volume of sulfur components, and 100 to 500 ppm by mass of nitrogen components. The kerosene fractions generally contain 15 to 25 percent by volume of total aromatic components, 0.1 to 1 percent by mass of sulfur components, and 1 to 20 ppm by mass of nitrogen components.

The values of these distillation characteristics indicated herein are those measured in compliance with the method described in JIS K 2254 "Petroleum products-Determination of distillation characteristics".

In the present invention, the above-described petroleum hydrocarbons are hydrodesulfurized with the catalyst of the present invention thereby reducing the sulfur component concentration to 10 ppm by mass or less, preferably 7 ppm by mass or less.

A kerosene fraction in a predetermined amount based on a gas oil is mixed therewith so that the properties of the gas oil required for diesel fuel such as fluidity for cold areas are adjusted. Therefore, the sulfur content in a diesel engine exhaust gas can be reduced by hydrodesulfurizing such a kerosene fraction to a sulfur concentration of 10 ppm by mass or less. Furthermore, it is expected that the use of the kerosene with a sulfur component concentration of 10 ppm by mass or less as fuel for heating devices such as stoves can significantly inhibit the generation of harmful substances such as sulfur oxides.

Furthermore, hydrodesulfurization with the catalyst of the present invention can reduce the nitrogen component concentration of petroleum hydrocarbons to 3 ppm by mass or less, preferably 1 ppm by mass. It is known that the nitrogen components are substances poisoning the catalyst used in hydrodesulfurization. If the nitrogen components are efficiently removed in the hydrodesulfurization process, the operation conditions of hydrodesulfurization can be eased and thus the cost thereof can be reduced. It is confirmed that hydrodesulfurization using the catalyst of the present invention proceeds in an extremely efficient manner because the nitrogen component concentration of the resulting oil can be reduced to 3 ppm or less. In other words, if the nitrogen component concentration is more than 3 ppm by mass, the hydrodesulfurization in a reactor will be significantly inhibited from proceeding efficiently by the nitrogen components and thus require to be conducted at higher temperature or hydrogen partial pressure or for a longer time period during which the catalyst contacts the oil fraction.

For a petroleum hydrocarbon containing 80 percent by volume or more of a fraction whose boiling point is in the range of 240 to 380°C, i.e., gas oil fraction, the catalyst, particularly containing phosphorus in the porous support of the present invention can exert nitrogen resistance properties better if the nitrogen component content of the hydrocarbon is 100 ppm or more and is more significant in the properties if the nitrogen component content is preferably 120 ppm by mass or more, more preferably 150 ppm by mass or more, and even more preferably 200 ppm by mass. For a petroleum hydrocarbon containing 80 percent by volume or more of a fraction whose boiling point is in the range of 140 to 240°C, i.e., kerosene fraction, the catalyst can exert nitrogen resistance properties better if the nitrogen component content of the hydrocarbon is 4 ppm by mass or more and is more significant in the properties if the nitrogen component content is preferably 6 ppm by mass or more, more preferably 8 ppm by mass or more, and even more preferably 10 ppm by mass or more.

The term "sulfur component concentration (sulfur component content)" used herein denotes the content by mass of the sulfur components based on the total mass of a petroleum hydrocarbon measured in compliance with the method described in JIS K 2541 "Crude oil and petroleum products-Determination of sulfur content" or ASTM-D5453. The term "nitrogen component content" used herein denotes the content by mass of the nitrogen components based on the total mass of a petroleum hydrocarbon measured in compliance with the method described in JIS K 2609 "Crude- petroleum and petroleum products-Determination of nitrogen content" or ASTM-D4629 or D5762.

When a feed stock is a petroleum hydrocarbon containing 80 percent by volume or more of a fraction whose boiling point is in the range of 240 to 380°C and hydrodesulfurized using the catalyst of the present invention, the total aromatic content thereof can be reduced to 18 percent by volume or less, preferably 16 percent by volume or less. It is said that the aromatic is one of the substances causing the generation of particulates contained in the exhaust gas from a diesel engine. A gas oil whose total aromatic content is in excess of 18 percent by volume is likely to increase the amount of particulates.

The term "total aromatic content" used herein denotes the total of the contents represented by volume percent of various aromatic components measured in compliance with a method described in a report entitled with JPI-5S-49-97 "Determination of Hydrocarbon Types-High Performance Liquid Chromatography" published by the Japan Petroleum Institute.

Furthermore, when a feed stock is a petroleum hydrocarbon containing 80 percent by volume or more of a fraction whose boiling point is in the range of 240 to 380°C and hydrodesulfurized with the catalyst of the present invention, the color of the resulting oil determined by ASTM color standard can be made 1.0 or less. If the color is 1.0 or greater, the resulting gas oil would become yellowish or brownish and thus be deteriorated in commercial value. It is noted that the coloration caused by hydrodesulfurization is relevant to the reaction temperature. However, the present invention does not require to be conducted at such a high reaction temperature or under any other sever operation conditions and thus can produce a colorless gas oil that is commercially highly valuable.

The term "ASTM color" used herein denotes a color determined by a method described in JIS K 2580 "Petroleum products-Determination of colour".

The hydrodesulfurization process of the present invention may be conducted under conditions that have been conventionally employed in hydrodesulfurization. Specifically, the LHSV(Liquid Hourly Space Velocity) is in the range of preferably 0.3 to 5.0 hr⁻¹, more preferably 0.35 to 4.0 hr⁻¹, and even more preferably 0.4 to 3.5 hr⁻¹. If the LHSV is less than 0.3 hr⁻¹, an enormous plant investment for construction of the reactor or the like would be required because the volume thereof will be required to be extremely large in order to obtain a certain through put. If the LHSV is greater than 5.0 hr⁻¹, the desulfurization reaction would not proceed sufficiently and thus would fail to desulfurize or dearomatize the feed stock because the time for which the catalyst contacts the feed stock is shortened.

The hydrogen partial pressure is in the range of preferably 3 to 8 MPa, more preferably 3.5 to 7 MPa, and even more preferably 4 to 6.5 MPa. If the hydrogen partial pressure is less than 3 MPa, hydrogenation or dearomatization would not be exerted. If the hydrogen partial pressure is greater than 8 MPa, an enormous plant investment for replacing the compressor or enhancing the strength of the reaction device would be required.

The reaction temperature is in the range of preferably 280 to 380°C. The reaction temperature of lower than 280°C is not preferable because sufficient desulfurization or aromatic-hydrogenation reaction speed would not be attained. The reaction temperature of higher than 380°C is not also preferable because it would cause reduction in the intended fraction yield due to the deterioration of the color of or decomposition of the resulting oil.

The hydrogen/oil ratio (volume ratio) is in the range of preferably 50 to 500 NL/L. The hydrogen/oil ratio indicates a ratio of hydrogen gas flow rate to feed stock flow rate. The larger the ratio, the more sufficiently hydrogen gas is supplied to the reaction system and more quickly the substances poisoning the catalyst active sites, such as hydrogen sulfide can be removed to the outside the system. As a result, the reactivity tends to be improved. However, if the ratio is in excess of 500 NL/L, the reactivity will be improved to a certain extent but thereafter will be less improved. If the ratio is smaller than 50 NL/L, the reactivity would be reduced and thus the desulfurization or dearomatization reaction would not proceed sufficiently.

Particularly, when a feed stock petroleum hydrocarbon to be hydrodesulfurized in the present invention is a gas oil fraction, the LHSV is in the range of preferably 0.3 to 2.0 hr⁻¹, more preferably 0.35 to 1.7 hr⁻¹, and even more preferably 0.4 to 1.2 hr⁻¹. If the LHSV is greater than 2.0 hr⁻¹, the desulfurization reaction would not proceed sufficiently and thus would fail to desulfurize or dearomatize the feed stock because the time for which the catalyst contacts the feed stock is shortened. The reaction temperature is in the range of preferably 300 to 380°C. The reaction temperature of lower than 300°C is not preferable because sufficient desulfurization or aromatic-hydrogenation reaction speed would not be attained. The hydrogen/oil ratio is in the range of preferably 100 to 500 NL/L. If the ratio is smaller than 50 NL/L, the reactivity would be reduced and thus the desulfurization or dearomatization reaction would not proceed sufficiently.

In a practical commercial plant, a catalyst is subjected to pre-sulfiding after being loaded into a reactor. There is no particular restriction on the conditions for the pre-sulfiding. Generally, a method has been employed in which a catalyst whose active metals are in the form of an oxide of an active metal such as cobalt, nickel, or molybdenum is loaded into a reactor and then the active metal is sulfided with sulfur components contained in a petroleum hydrocarbon fraction or a sulfiding agent by circulating the fraction only or that mixed with the sulfiding agent through the reactor at a temperature of 200°C or higher.

There is no particular restriction on the reaction mode of the reactor for hydrodesulfurization. However, the reaction mode may be selected from moving bed and fixed bed modes but is preferably a fixed bed mode. The feed stock may be circulated by a down-flow mode or an up-flow mode.

When a gas oil fraction is hydrodesulfurized by the process of the present invention, the resulting extremely low sulfur and aromatic gas oil may be singly used as a gas oil for diesel engines or alternatively may be used in the form of a mixture with any other component such as a base material, as a gas oil for diesel engines. When a kerosene fraction is hydrodesulfurized by the process of the present invention, the resulting kerosene may be used as a gas oil for diesel engines.

### [Applicability in the Industry]

The catalyst of the present invention has an extremely high desulfurization activity and can attain an extremely high depth of desulfurization to a sulfur content of 10 ppm by mass or less. Furthermore, the catalyst is highly resistant to nitrogen compounds which inhibit the desulfurization reaction.

### [Best Mode for Carrying out the Invention]

The present invention will be described in more details with reference to the following examples but is not limited thereto.

### (Example 1)

Sodium silicate solution No. 3 was added to 1 kg of an aqueous solution of 5 percent by mass of sodium aluminate and then placed in a vessel kept at a temperature of 70°C. A solution was prepared by adding an aqueous solution of titanium (IV) sulfate containing 24 percent by mass of TiO₂ to 1 kg of an aqueous solution of 2.5 percent by mass of aluminum sulfate in a separate vessel kept at a temperature of 70°C and then added dropwise to the aqueous solution containing sodium aluminate for about 15 minutes. The amounts of the water glass and titanium sulfate aqueous solution were adjusted, respectively so that silica and titania were each contained in a predetermined amount. The addition of the solution was stopped when the mixture reached pH 6.9 to 7.5. The resulting slurry product was filtered out thereby obtaining a cake slurry. The cake slurry was placed in a vessel equipped with a reflux condenser and mixed with 300 ml of distilled water and 3 g of a 27 percent ammonia aqueous solution. The mixture was then heated and stirred at a temperature of 70°C for 24 hours. The slurry was placed in a kneader and kneaded, heating it at a temperature of 80°C or higher to remove the moisture thereby obtaining a clay-like kneaded product. The kneaded product was placed in an extruder and then extruded into a cylindrical form with a diameter of 1.5 mm. The resulting cylindrical products were dried at a temperature of 110°C for one hour and then calcined at a temperature of 550°C thereby obtaining molded supports. 300 g of the resulting molded supports were sprayed with a solution prepared by adding to 150 ml of distilled water molybdenum trioxide, cobalt (II) nitrate hexahydrate, and 85 percent phosphoric acid and adding malic acid to the mixture until malic acid was dissolved so as to be impregnated with the solution. The amounts of molybdenum trioxide, cobalt (II) nitrate hexahydrate, and phosphoric acid were adjusted, respectively so that each of them was supported in a predetermined amount. The impregnated products were dried at a temperature of 110°C for one hour and then calcined at a temperature of 550°C thereby obtaining Catalyst A. The properties of Catalyst A are set forth in Table 1 below.

### (Example 2)

The procedures of Example 1 were followed except that the amounts of cobalt (II) nitrate and molybdenum trioxide were adjusted so that each of them was supported in a predetermined amount thereby obtaining Catalyst B. The properties of Catalyst B are set forth in Table 1 below.

### (Example 3)

Sodium silicate solution No. 3 was added to 1 kg of an aqueous solution of 5 percent by mass of sodium aluminate and then placed in a vessel kept at a temperature of 70°C. 1 kg of an aqueous solution of 2.5 percent by mass of aluminum sulfate was placed in a separate vessel kept at a temperature of 70°C and then added dropwise to the solution containing sodium aluminate for about 15 minutes. The amounts of the water glass was adjusted so that silica was contained in a predetermined amount. The addition of the solution was stopped when the mixture reached pH 6.9 to 7.5. The resulting slurry product was filtered out thereby obtaining a cake slurry. The cake slurry was placed in a vessel equipped with a reflux condenser and mixed with 300 ml of distilled water and 3 g of a 27 percent ammonia aqueous solution. The mixture was then heated and stirred at a temperature of 70°C for 24 hours. The slurry was placed in a kneader and kneaded, heating it at a temperature of 80°C or higher to remove the moisture thereby obtaining a clay-like kneaded product. The kneaded product was placed in an extruder and then extruded into a cylindrical form with a diameter of 1.5 mm. The resulting cylindrical products were dried at a temperature of 110°C for one hour and then calcined at a temperature of 550°C thereby obtaining molded supports. 300 g of the resulting molded supports were sprayed with a solution prepared by adding to 150 ml of distilled water, molybdenum trioxide, cobalt (II) nitrate hexahydrate, and 85 percent phosphoric acid and adding malic acid to the mixture until malic acid was dissolved so as to be impregnated with the solution. The amounts of molybdenum trioxide, cobalt (II) nitrate hexahydrate, and phosphoric acid were adjusted, respectively so that each of them was supported in a predetermined amount. The impregnated products were dried at a temperature of 110°C for one hour and then calcined at a temperature of 550°C thereby obtaining Catalyst C. The properties of Catalyst C are set forth in Table 1 below.

### (Example 4)

The procedures of Example 3 were followed except that nickel nitrate hexahydrate was used in place of cobalt (II) nitrate hexahydrate thereby obtaining Cobalt D. The amount of nickel nitrate hexahydrate was adjusted so that it is supported in a predetermined amount.

### (Comparative Example 1)

300 g of the molded supports obtained in Example 3 were sprayed with a solution prepared by adding to 150 ml of distilled water, molybdenum trioxide, cobalt (II) nitrate hexahydrate, and 85 percent phosphoric acid and adding malic acid to the mixture until malic acid was dissolved so as to be impregnated with the solution. The amounts of molybdenum trioxide, cobalt (II) nitrate hexahydrate, and phosphoric acid were adjusted, respectively so that each of them was supported in a predetermined amount. The impregnated products were dried at a temperature of 110°C for one hour and then calcined at a temperature of 550°C thereby obtaining Catalyst X. The properties of Catalyst X are set forth in Table 1 below.

### (Example 5)

18.0 g of sodium silicate solution No. 3 were added to 3000 g of an aqueous solution of 5 percent by mass of sodium aluminate and then placed in a vessel kept at a temperature of 65°C. A solution was prepared by adding 6.0 g of 85 percent phosphoric acid to 3000 g of an aqueous solution of 2.5 percent by mass of aluminum sulfate in a separate vessel kept at a temperature of 65°C. To this solution was added dropwise the solution containing sodium aluminate until a pH of 7.0 was reached. The resulting slurry product was filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating at a temperature of 80°C or higher to remove the moisture thereby obtaining a clay-like kneaded product. The kneaded product was placed in an extruder and extruded into a cylindrical form with a diameter of 1.5 mm. The resulting cylindrical products were dried at a temperature of 110°C for one hour and then calcined at a temperature of 550°C thereby obtaining molded supports.

Into an eggplant type flask were placed 50 g of the resulting molded supports and then charged a solution containing 17.3 g of molybdenum trioxide, 13.2 g of cobalt (II) nitrate hexahydrate, 3. 9 g of 85 percent phosphoric acid, and 4.0 g of malic acid, deaerating with a rotary evaporator so that the supports were impregnated with the solution. The impregnated supports were dried at a temperature of 120°C for one hour and then calcined at a temperature of 550°C thereby obtaining Catalyst E. The properties of Catalyst E are set forth in Table 2 below.

### (Example 6)

Into an eggplant type flask were placed 50 g of the molded supports obtained in Example 5 and then charged a solution containing 17.0 g of molybdenum trioxide, 13.2 g of nickel (II) nitrate hexahydrate, 3.9 g of 85 percent phosphoric acid, and 4.0 g of malic acid, deaerating with a rotary evaporator so that the supports were impregnated with the solution. The impregnated supports were dried at a temperature of 120°C for one hour and then calcined at a temperature of 550°C thereby obtaining Catalyst F. The properties of Catalyst F are set forth in Table 2 below.

### (Example 7)

10.0 g of sodium silicate solution No. 3 were added to 3000 g of an aqueous solution of 5 percent by mass of sodium aluminate and then placed in a vessel kept at a temperature of 65°C. A solution was prepared by adding 4.0 g of boric acid to 3000 g of an aqueous solution of 2.5 percent by mass of aluminum sulfate in a separate vessel kept at a temperature of 65°C. To this solution were added dropwise the solution containing sodium aluminate and 50 ml of an aqueous solution containing 6.0 g of 85 percent phosphoric acid at the same time until a pH of 7.0 was reached. The resulting slurry product was filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating it at a temperature of 80°C or higher to remove the moisture thereby obtaining a clay-like kneaded product. The kneaded product was placed in an extruder and extruded into a cylindrical form with a diameter of 1.5 mm. The resulting cylindrical products were dried at a temperature of 110°C for one hour and then calcined at a temperature of 550°C thereby obtaining molded supports.

Into an eggplant type flask were placed 50 g of the resulting molded supports and then charged a solution containing 17.3 g of molybdenum trioxide, 13.2 g of cobalt (II) nitrate hexahydrate, 3. 9 g of 85 percent phosphoric acid, and 4.0 g of malic acid, deaerating with a rotary evaporator so that the supports were impregnated with the solution. The impregnated supports were dried at a temperature of 120°C for one hour and then calcined at a temperature of 550°C thereby obtaining Catalyst G. The properties of Catalyst G are set forth in Table 2 below.

### (Comparative Example 2)

Into an eggplant type flask were placed 50 g of the molded supports obtained in Example 6 and then charged a solution containing 16.1 g of molybdenum trioxide, 19.0 g of cobalt (II) nitrate hexahydrate, 1.9 g of 85 percent phosphoric acid, and 5.0 g of malic acid, deaerating with a rotary evaporator so that the supports were impregnated with the solution. The impregnated supports were dried at a temperature of 120°C for one hour and then calcined at a temperature of 550°C thereby obtaining Catalyst Y. The properties of Catalyst Y are set forth in Table 2 below.

### (Comparative Example 3)

10.0 g of sodium silicate solution No. 3 were added to 3000 g of an aqueous solution of 5 percent by mass of sodium aluminate and then placed in a vessel kept at a temperature of 65°C. An aqueous solution of 2.5 percent by mass of aluminum sulfate was prepared in a separate vessel kept at a temperature of 65°C. To this solution was added dropwise the solution containing sodium aluminate until a pH of 7.0 is reached. The resulting slurry product was filtered out thereby obtaining a cake slurry. The cake slurry was placed in a vessel equipped with a reflux condenser and mixed with 150 ml of distilled water and 10 g of a 27 percent ammonia aqueous solution. The mixture was then heated and stirred at a temperature of 80°C for 24 hours. The slurry was placed in a kneader and kneaded, heating at a temperature of 80°C or higher to remove the moisture thereby obtaining a clay-like kneaded product. The kneaded product was placed in an extruder into a cylindrical form with a diameter of 1.5 mm with an extruder. The resulting cylindrical products were dried at a temperature of 110°C for one hour and then calcined at a temperature of 550°C thereby obtaining molded supports. Into an eggplant type flask were placed 50 g of the resulting molded supports and then charged a solution containing 16.1 g of molybdenum trioxide, 19.0 g of cobalt (II) nitrate hexahydrate, 1.9 g of 85 percent phosphoric acid, and 5.0 g of malic acid, deaerating with a rotary evaporator so that the supports were impregnated with the solution. The impregnated supports were dried at a temperature of 120°C for one hour and then calcined at a temperature of 550°C thereby obtaining Catalyst Z. The properties of Catalyst Z are set forth in Table 2 below.

### (Example 8)

100 ml of each of Catalysts A to G were loaded into a reactor tube with an inner diameter of 25 mm and then pre-sulfided with a straight gas oil to which dimethyldisulfide had been added such that the sulfur component concentration was made 3 percent by mass, at an average catalyst layer temperature of 300°C, hydrogen partial pressure of 6 MPa, LHSV of 1 hr⁻¹, and hydrogen/oil ratio of 200 NL/L, for 4 hours. After the pre-sulfiding, hydrodesulfurization was conducted by circulating a straight gas oil obtained from a Middle Eastern crude oil (10% recovered temperature: 240°C, 90% recovered temperature: 340°C, sulfur content: 1.28 percent by mass, nitrogen content: 210 ppm by mass) at a reaction temperature of 350°C, pressure of 5 MPa, LHSV of 1 hr⁻¹, and hydrogen/oil ratio of 200 NL/L. The result of the reactivity of each catalyst is set forth in Table 3.

### (Comparative Example 4)

100 ml of Catalyst X were filled into a reactor tube with an inner diameter of 25 mm and pre-sulfided under the conditions same as those of Example 8. Thereafter, hydrodesulfurization was conducted under the conditions same as those of Example 8. The result of the reactivity of this catalyst is set forth in Table 3.

### (Example 9)

20 ml of Catalyst A were loaded into a reactor tube with an inner diameter of 15 mm and then pre-sulfided with a straight gas oil to which dimethyldisulfide had been added such that the sulfur component concentration was made 3 percent by mass, at an average catalyst layer temperature of 300°C, hydrogen partial pressure of 5 MPa, LHSV of 1 hr⁻¹, and hydrogen/oil ratio of 200 NL/L, for 4 hours. After the pre-sulfiding, hydrodesulfurization was conducted by circulating Feed Stock A which was a straight gas oil obtained from a Middle Eastern crude oil (10% recovered temperature: 210°C, 90% recovered temperature: 342°C, sulfur content: 1.00 percent by mass, nitrogen content: 90 ppm by mass) at a reaction temperature of 340°C, pressure of 5.0 MPa, LHSV of 1 hr⁻¹, and hydrogen/oil ratio of 200 NL/L. Thereafter, hydrodesulfurization was conducted by circulating Feed Stock B (10% recovered temperature: 232°C, 90% recovered temperature: 349°C, sulfur content: 1.20 percent by mass, nitrogen content: 210 ppm by mass) so as to compare the resulting sulfur content with that of the oil produced by hydrodesulfurizing Feed Stock A.

The same operation was conducted using Catalysts B to G, respectively. The results are set forth in Table 4.

### (Comparative Example 5)

The same operation as that of Example 9 was conducted using Catalysts Y and Z. The results are set forth in Table 4.

**Table 1**

| | Example 1 | Example 2 | Example 3 | Example 4 | Comparative Example 1 |
|---|---|---|---|---|---|
| Catalyst | Catalyst A | Catalyst B | Catalyst C | Catalyst D | Catalyst X |
| Al₂O₃ content (mass% of Support) | 96.1 | 96.1 | 98.0 | 98.0 | 98.0 |
| SiO₂ content (mass% of Support) | 1.9 | 1.9 | 2.0 | 2.0 | 2.0 |
| TiO₂ content (mass% of Support) | 2.0 | 2.0 | - | - | - |
| MoO₃ amount (mass% of catalyst) | 22.9 | 24.2 | 22.9 | 22.9 | 23.5 |
| CoO amount (mass% of catalyst) | 2.5 | 2.0 | 2.5 | - | 3.5 |
| NiO amount (mass% of catalyst) | - | - | - | 2.6 | - |
| P₂O₅ amount (mass% of catalyst) | 4.0 | 4.1 | 4.1 | 4.0 | 2:0 |
| [Group 8 metal oxide] / [Group 6A metal oxide] (mol/mol) | 0.210 | 0.159 | 0.210 | 0.219 | 0.286 |
| [Phosphorus pentoxide] / [Group 6A metal oxide] (mol/mol) | 0.177 | 0.172 | 0.182 | 0.177 | 0.086 |
| Average pore radius (Å) | 35 | 35 | 35 | 35 | 38 |
| Percentage of pore volume with an average pore radius of 30 Å or smaller (%) | 28 | 28 | 29 | 29 | 21 |
| Percentage of pore volume with an average pore radius of 45 Å or larger (%) | 14 | 14 | 13 | 13 | 19 |

**Table 2**

| | Example 5 | Example 6 | Example 7 | Comparative Example 2 | Comparative Example 3 |
|---|---|---|---|---|---|
| Catalyst | Catalyst E | Catalyst F | Catalyst G | Catalyst Y | Catalyst Z |
| Al₂O₃ content (mass% of Support) | 91.2 | 91.2 | 91.2 | 91.2 | 97.1 |
| SiO₂ content (mass% of Support) | 4.8 | 4.8 | 2.7 | 4.8 | 2.9 |
| B₂O₃ content (mass% of Support) | - | - | 2.1 | - | - |
| P₂O₅ content (mass% of Support) | 4.0 | 4.0 | 4.0 | 4.0 | - |
| MoO₃ amount (mass% of catalyst) | 24.0 | 24.0 | 24.0 | 23.0 | 23.0 |
| CoO amount (mass% of catalyst) | 2.5 | - | 2.5 | 3.7 | 3.7 |
| NiO amount (mass% of catalyst) | - | 2.5 | - | - | - |
| P₂O₅ amount (mass% of catalyst) | 4.0 | 4.0 | 4.0 | 2.0 | 2.0 |
| [Group 8 metal oxide] / [Group 6A metal oxide] (mol/mol) | 0.200 | 0.201 | 0.200 | 0.309 | 0.309 |
| [Phosphorus pentoxide] / [Group 6A metal oxide] (mol/mol) | 0.169 | 0.169 | 0.169 | 0.088 | 0.088 |
| Average pore radius (Å) | 35 | 36 | 34 | 35 | 38 |
| Percentage of pore volume with an average pore radius of 30Å or smaller (%) | 27 | 27 | 26 | 26 | 27 |
| Percentage of pore volume with an average pore radius of 45 Å or larger (%) | 16 | 15 | 16 | 16 | 18 |

**Table 3**

| | Example 8 | | | | | | | Comparative Example 4 |
|---|---|---|---|---|---|---|---|---|
| Catalyst | Catalyst A | Catalyst B | Catalyst C | Catalyst D | Catalyst E | Catalyst F | Catalyst G | Catalyst X |
| Sulfur content of hydrodesulfurized oil (mass ppm) | 4.3 | 3.9 | 5.5 | 6.1 | 6.2 | 4.0 | 6.6 | 15.8 |
| Nitrogen content of hydrodesulfurized oil (mass ppm) | <1 | <1 | <1 | <1 | 1 | <1 | 1 | 6 |
| ASTM color | L0.5 | L0.5 | L0.5 | L0.5 | L0.5 | L0.5 | L0.5 | L1.0 |

**Table 4**

| | Example 9 | | | | | | | Comparative Example 5 | |
|---|---|---|---|---|---|---|---|---|---|
| Catalyst | Catalyst A | Catalyst B | Catalyst C | Catalyst D | Catalyst E | Catalyst F | Catalyst G | Catalyst Y | Catalyst Z |
| Sulfur content of oil produced by hydrodesulfurizing feed stock A (mass ppm) | 4.1 | 3.4 | 5.0 | 5.0 | 6.5 | 4.3 | 7.0 | 11.1 | 13.6 |
| Sulfur content of oil produced by hydrodesulfurizing feed stock B (mass ppm) | 6.7 | 6.2 | 7.9 | 8.1 | 7.5 | 6.7 | 7.7 | 17.2 | 20.8 |
| Increase in sulfur concentration (mass ppm) | +2.6 | +2.8 | +2.9 | +3.1 | +1.0 | + 2.4 | + 0.7 | + 6.1 | +7.2 |

## Claims

1. A hydrodesulfurization catalyst for petroleum hydrocarbons wherein an inorganic porous support composed of mainly alumina contains, as active metals, at least one metal selected from the metals of Group 8 of the periodic table and at least one metal selected from the metals of Group 6A of the periodic table in a molar ratio defined by [oxide of the Group 8 metal]/[oxide of the Group 6A metal] ranging from 0.105 to 0.265 and the content of the Group 6A metal in terms of oxide is in the range of 20 to 30 percent by mass based on the mass of the catalyst.

2. The hydrodesulfurization catalyst according to claim 1 wherein said inorganic porous support further contains phosphorus in an amount in terms of oxide of 0.5 to 10 percent by mass of the support.

3. The hydrodesulfurization catalyst according to claim 1 or 2 wherein said inorganic porous support further contains at least one selected from the group consisting of Si, Ti, Zr, Mg, Ca, and B in an amount in terms of oxide of 1 to 10 percent by mass of the support.

4. The hydrodesulfurization catalyst according to any one of claims 1 to 3 wherein said Group 8 metal is cobalt and/or nickel, said Group 6A metal is molybdenum and/or tungsten, and the total content of these metals in terms of oxide is 22 percent by mass or more based on the mass of the catalyst.

5. The hydrodesulfurization catalyst according to any one of claims 1 to 4 wherein said inorganic porous support further contains phosphorus in a molar ratio defined by [phosphorus pentoxide]/[the Group 6A metal oxide] ranging from 0.105 to 0.255.

6. The hydrodesulfurization catalyst according to any one of claims 1 to 5 wherein the catalyst has an average pore radius sought by the BET method using nitrogen in the range of 30 to 45 Å, the pore volume of the catalyst with a pore radius of 30 Å or smaller is in the range of 13 to 22 percent of the total pore volume, and the pore volume of the catalyst with a pore radius of 45 Å or larger is in the range of 5 to 20 percent of the total pore volume.

7. A process for hydrodesulfurizing a petroleum hydrocarbon wherein said petroleum hydrocarbon is hydrodesulfurized using the catalyst defined in any one of claims 1 to 6.

8. The process for hydrodesulfurizing a petroleum hydrocarbon according to claim 7 wherein said petroleum hydrocarbon contains 80 percent by volume or more of a fraction whose boiling point is in the range of 240 to 380°C.

9. The process for hydrodesulfurizing a petroleum hydrocarbon according to claim 7 or 8 wherein the oil produced by the process contains sulfur components in an amount of 10 ppm by mass or less and nitrogen components in an amount of 3 ppm by mass or less.

10. The process for hydrodesulfurizing a petroleum hydrocarbon according to any of one of claims 7 to 9 wherein the total aromatic content of the oil produced by the process is 18 percent by volume or less.

11. The process for hydrodesulfurizing a petroleum hydrocarbon according to any of one of claims 7 to 10 wherein the oil produced by the process is 1.0 or less in color as determined by ASTM color.

12. The process for hydrodesulfurizing a petroleum hydrocarbon according to any of one of claims 7 to 11 wherein the petroleum hydrocarbon is hydrodesulfurized at an LHSV of 0.3 to 2.0 hr⁻¹, hydrogen partial pressure of 3 to 8 MPa, reaction temperature of 300 to 380°C, and hydrogen/oil ratio (volume ratio) of 100 to 500 NL/l.
